# EUROPÄISCHE PATENTSCHRIFT

(11) **EP 0 736 792 B1**
(45) Veröffentlichungstag und Bekanntmachung des Hinweises auf die Patenterteilung: **18.06.2003**
(21) Anmeldenummer: 96104324.7
(22) Anmeldetag: 19.03.1996
(51) Int. Cl.: F21V 8/00

(54) **Bildschirmgerät**
Display device
Dispositif d'affichage

(30) Priorität: 03.04.1995 DE 19512079
(43) Veröffentlichungstag der Anmeldung: 09.10.1996
(73) Patentinhaber: MANNESMANN Aktiengesellschaft, 40213 Düsseldorf (DE); Siemens Aktiengesellschaft, 80333 München (DE)
(72) Erfinder: Angermüller, Helmut, Dr., 61440 Oberursel (DE); Heimann, Josef, Dipl.-Ing., 40474 Düsseldorf (DE)

(56) Entgegenhaltungen:
- FR-A- 1 409 010
- FR-A- 2 235 631
- US-A- 4 791 745
- US-A- 5 075 824
- US-A- 5 130 097
- PATENT ABSTRACTS OF JAPAN Bd. 017, Nr. 621 (P-1645) 16 November 1993 & JP 05 197 447 A (HITACHI LTD) 06 August 1993

## Beschreibung

Die Erfindung betrifft ein Bildschirmgerät mit einem von mindestens einer Lampe beleuchtbaren Anzeigefeld und mit Mitteln zur Übertragung von Licht auf das Anzeigefeld, wobei die mindestens eine Lampe in einem von dem Bildschirmgerät baulich getrennten Zusatzgerät angeordnet ist, das Bildschirmgerät weiterhin eine eigene Stromversorgung aufweist und das Bildschirmgerät auch ohne das Zusatzgerät einsetzbar ist.

Bildschirmgeräte mit beleuchtbarem Anzeigefeld sind allgemein bekannt und werden häufig als Notebooks, Uhren oder Handys eingesetzt. Hierbei ist die Lampe in das Bildschirmgerät integriert und an die ohnehin vorhandene Stromversorgung angeschlossen. Dabei befindet sich die Lampe entweder hinter dem Anzeigefeld und durchleuchtet dieses, oder sie ist unter einer Verkleidung am Rand des Anzeigefeldes angeordnet und beleuchtet dieses von der Seite. Um die Abmessungen des Bildschirmgerätes in Grenzen zu halten, ist man in beiden Fällen bestrebt, die Lampe so nah wie möglich an das Anzeigefeld anzuordnen. Das hat jedoch zur Folge, dass durch die Wärmeabgabe der Lampe das Anzeigefeld und auch das Bildschirmgerät aufgeheizt werden. Von Nachteil ist auch, dass die Lampe das Gewicht und das Volumen erhöht und im Falle eines tragbaren Bildschirmgerätes vom Benutzer mitgeführt werden muss, auch wenn er sie nicht benötigt.

Da das Gewicht und das Volumen des Bildschirmgerätes ein bestimmtes vertretbares Maß nicht überschreiten darf, kann die als Batterie ausgebildete Stromversorgung nur begrenzte Größe haben. Dies führt wiederum auch zu einer Begrenzung der möglichen Leuchtdichte, die die Lampe erzeugen kann.

Derartige Bildschirmgeräte unterliegen als mobile Einheiten auch erheblichen Stoßbelastungen, die häufig zu einem frühzeitigen Defekt der Lampen führen.

Wenn man die durch eine Lampe auftretende Erwärmung des Bildschirmgerätes verringern will, kann man auch eine Lampe nach Art einer Leselampe zur Beleuchtung des Anzeigefeldes von oben vorsehen. Das erhöht jedoch ebenfalls das Gewicht und das Volumen des Bildschirmgerätes und führt zu unerwünschten Reflexionen.

Diese Art der Gestaltungsform ist aus US-A-5130907 bekannt. Dort wird ein Gerät für Computerspiele, im speziellen ein Nintendo Gameboy, beschrieben, dessen LCD-Bildschirm von einem externen Lichtapparat beleuchtet werden kann. Dieser Lichtapparat ist in Form eines Rahmens ausgebildet, welcher von oben auf den Gameboy aufgesetzt wird und dabei die Fläche des LCD-Bildschirms frei lässt. Im Lichtapparat sind zwei Lampen enthalten, die über Reflexionsflächen den LCD-Bildschirm indirekt von oben beleuchten. Die Lampen sind links und rechts seitlich oberhalb des Bildschirms angeordnet, so dass dieser an den Rändern stärker ausgeleuchtet wird als zur Bildschirmmitte hin. Reflexionen sind auch durch die indirekte Beleuchtung nicht ganz zu vermeiden.

Der Erfindung liegt das Problem zugrunde, ein Bildschirmgerät der eingangs genannten Art so zu gestalten, dass eine Beleuchtung mit hoher Leuchtdichte ermöglicht wird, wobei eine Aufheizung des Bildschirmgerätes durch die Lampe so gering wie möglich gehalten wird, ohne dass Reflexionen auftreten und ohne dass das Bauvolumen und/oder das Gewicht des Bildschirmgerätes zunimmt.

Dieses Problem wird erfindungsgemäß durch ein Bildschirmgerät nach Patentanspruch 1 gelöst.

Mit der baulichen Trennung von Bildschirmgerät und die Lampe aufweisendem Zusatzgerät wird eine deutliche Verringerung der Wärmebelastung des Anzeigefeldes erzielt, da die Wärme erzeugenden Teile sich außerhalb des Bildschirmgerätes befinden. Im Falle eines tragbaren Bildschirmgerätes verringert sich dessen Gewicht und Volumen, da dieses keine Beleuchtung enthält, dennoch aber in Verbindung mit dem Zusatzgerät eine Beleuchtung möglich ist.

Da die Beleuchtungseinrichtung und die sie versorgende Stromquelle stationär außerhalb des Bildschirmgerätes angeordnet sind, können sie groß ausgebildet sein und einen hohen Stromverbrauch ermöglichen, was wiederum eine Beleuchtung hoher Leuchtdichte gestattet.

Das Bildschirmgerät kann konstruktiv so gestaltet werden, daß das Zusatzgerät an einem Rand des Anzeigefeldes befestigt wird. Dessen Beleuchtung gestaltet sich jedoch komfortabler, wenn das Bildschirmgerät an seiner Rückseite zumindest einen Lichteinlaß hat, hinter den die Lampe des Zusatzgerätes angeordnet ist, und wenn das Anzeigefeld durchleuchtbar ist. Ein besonderer Vorteil dieser Weiterbildung der Erfindung liegt darin, daß die indirekte Beleuchtung des Anzeigefeldes unerwünschte Reflexionen vermeidet. Weiterhin ist mit einer Durchleuchtung eine besonders gleichmäßige Ausleuchtung zu erzielen.

Um das Licht von der Lampe gleichmäßig auf das Anzeigefeld zu übertragen, können Spiegel vorgesehen sein. Diese Spiegel erhöhen jedoch den konstruktiven Aufwand und benötigen ein großes Volumen. Der konstruktive Aufbau gestaltet sich dann besonders einfach, wenn das Mittel im Bildschirmgerät zur Übertragung von Licht auf das Anzeigefeld ein Lichtleiter ist. Derartige Lichtleiter lassen sich kostengünstig herstellen und sind einfach zu verlegen. Deren optische Eigenschaften erlauben die besonders gleichmäßige Ausleuchtung des Anzeigefeldes. Eine Weiterleitung der von der Lampe abgegebenen Wärme wird durch das Material des Lichtleiters unterbunden. Üblicherweise für Lichtleiter verwendete Materialien weisen einen hohen Transmissionsgrad für sichtbares Licht und einen im Vergleich dazu niedrigen für Wärmestrahlung auf.

Auch im Zusatzgerät läßt sich das Licht besonders leicht zu benötigten Punkten leiten, wenn im Zusatzgerät ein Lichtleiter vorhanden ist.

Eine vorteilhafte Weiterbildung der Erfindung besteht darin, daß auf der Rückseite des Bildschirmgerätes mit Lichtauskoppelungsflächen des Zusatzgerätes korrespondierende Lichteinkoppelungsflächen angeordnet sind. Auf diese Weise wird eine optimale Verteilung des Lichtes erreicht.

Besonders vorteilhaft ist der Übergang des Lichtes von dem Zusatzgerät zu dem Bildschirmgerät, wenn die Lichtauskoppelungsfläche eine konvexe Form und die Lichteinkoppelungsfläche eine konkave Form aufweist. Diese Formen sind leicht zu reinigen und garantieren eine sehr gute Lichtleitung. Weiterhin zentriert sich das Bildschirmgerät selbständig auf dem Zusatzgerät, was einem erhöhten Bedienkomfort zugute kommt. Eine weitere Zentrierung oder Führung für das Bildschirmgerät ist damit nicht erforderlich. Natürlich kann in Umkehrung auch die Lichtauskoppelungsfläche eine konkave und die Lichteinkoppelungsfläche eine konvexe Form besitzen.

Für ein tragbares Bildschirmgerät, wie z.B. ein Navigationsgerät für ein Kraftfahrzeug, ist es von Vorteil, wenn das Zusatzgerät eine das Bildschirmgerät aufnehmende, im Kraftfahrzeug ortsfest installierte Halterung ist. Damit kann das Zusatzgerät an einem Ort im Kraftfahrzeug bleiben, während das Bildschirmgerät transportabel und mit seiner eigenen Stromversorgung (Akkumulator) - wenngleich auch ohne eigene Beleuchtung - einsetzbar bleibt.

Auf diese Weise wird das Gewicht des mobilen Bildschirmgerätes niedrig gehalten und trotz vergleichsweise kleiner Akkumulatoren für die interne Stromversorgung eine lange Betriebsbereitschaft gesichert, da ein Energieverbrauch durch eine Beleuchtung während des mobilen Betriebs vollständig vermieden wird.

Das Bildschirmgerät wird komfortabler, wenn gemäß einer Weiterbildung der Erfindung in dem Zusatzgerät ein von dem Bildschirmgerät gesteuerter, die Lampe aktivierender Schalter vorhanden ist.

Für das Bildschirmgerät ist es von Vorteil, wenn es zusätzlich zur bildschirmgerätinternen Stromversorgung eine davon externe unabhängige Stromversorgung hat. Besonders in Verbindung mit der Ausbildung des Zusatzgerätes als ortsfeste Halterung bietet diese Weiterbildung der Erfindung eine sicherere Stromversorgung für Lampe und Bildschirmgerät. Da die in dem Bildschirmgerät vorhandene Stromversorgung nicht für Beleuchtungszwecke verwendet wird, wird deren Kapazität geschont und es erhöht sich damit auch deren Lebensdauer.

Von großem Vorteil ist es, wenn ein im Bildschirmgerät angeordneter Akkumulator mit der externen Stromversorgung verbindbar ist. Damit kann dann der Akkumulator aufgeladen werden.

Das Anzeigefeld ist immer gut zu erkennen, wenn die Lampe dimmbar, insbesondere umgebungslichtabhängig dimmbar ist.

Ein besonders vielfältiges Einsatzgebiet der Erfindung liegt darin, daß das Bildschirmgerät zur Anzeige von in einem KFZ benötigten Informationen ausgebildet ist.

Insbesondere im KFZ kann das Zusatzgerät auch ohne das Bildschirmgerät als Beleuchtungseinheit z.B. zum Kartenlesen benutzt werden.

Die Lampe im Zusatzgerät kann zu einer Signalübertragung benutzt werden, wenn die Lampe von dem Bildschirmgerät beeinflußbar ist. Dadurch ist es möglich, die Lampe z.B. bei vorprogrammierten Ereignissen im Bildschirmgerät von diesem angesteuert blinken zu lassen.

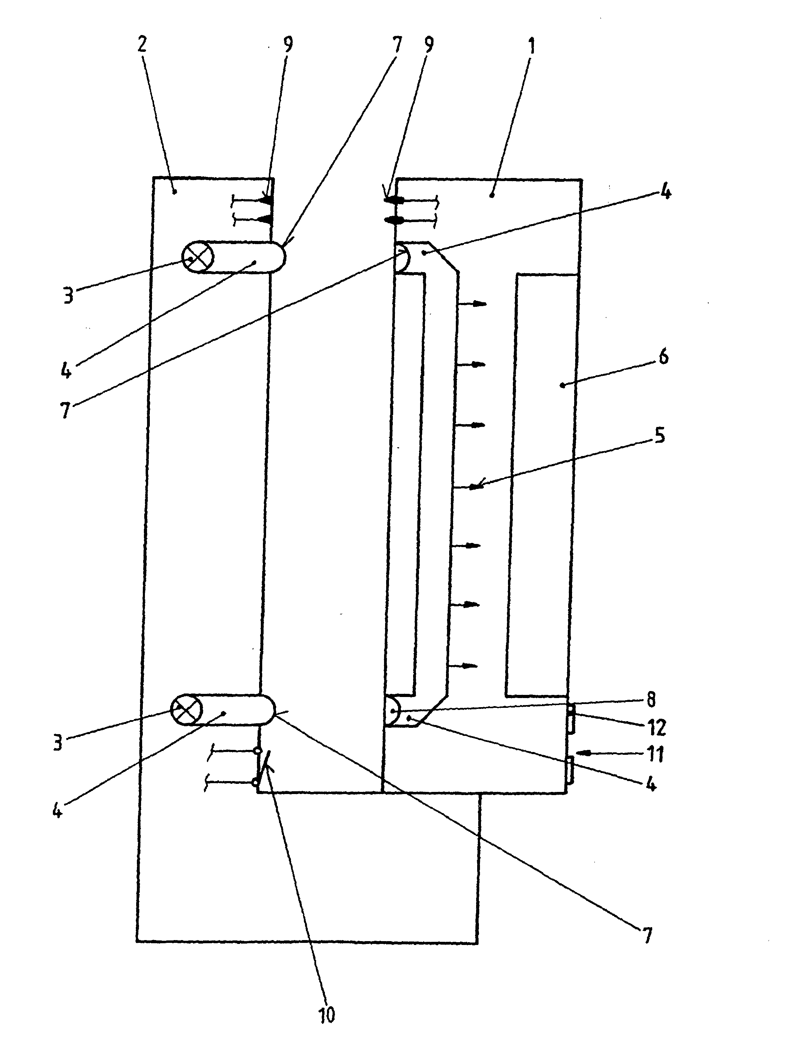

Die Erfindung läßt zahlreiche Ausführungsformen zu. Zur weiteren Verdeutlichung ihres Grundprinzips ist in der Zeichnung ein Querschnitt durch eine erfindungsgemäße Beleuchtungseinrichtung dargestellt und wird nachfolgend beschrieben.

Die Zeichnung zeigt ein Bildschirmgerät 1, welches in ein Zusatzgerät 2 eingeschoben wird. In dem Zusatzgerät 2 sind Lampen 3 angeordnet, welche über Lichtleiter 4 mit dem Bildschirmgerät 1 verbunden sind. Im Bildschirmgerät 1 sind ebenfalls Lichtleiter 4 vorhanden, die das Licht 5 zu einem Anzeigefeld 6 transportieren, welches zweckmäßig als stromsparendes Flüssigkristall-Display ausgebildet ist. Der Übergang des Lichtes 5 von dem Zusatzgerät 2 zu dem Bildschirmgerät 1 erfolgt über Lichtauskoppelungsflächen 7 am Zusatzgerät 2 und Lichteinkoppelungsflächen 8 am Bildschirmgerät 1. Die Lichtauskoppelungsfläche 7 weist eine konvexe Form auf, die auf eine konkave Form der Lichteinkoppelungsfläche 8 abgestimmt ist. Diese Formgebung zentriert das Bildschirmgerät 1 auf dem Zusatzgerät 2. Damit ist immer eine optimale Weiterleitung des Lichtes 5 gewährleistet.

Eine externe Stromversorgung des Bildschirmgerätes 1 erfolgt über Kontaktschienen 9 nach dessen Einschieben in das Zusatzgerät 2. Ein nicht dargestellter Akkumulator im Bildschirmgerät 1, der dessen Betrieb im mobilen Einsatz unabhängig von der externen Stromversorgung gestattet, wird zeitgleich über die Kontaktschienen 9 aufgeladen. Dies hat den großen Vorteil, daß das Bildschirmgerät 1 für den mobilen Einsatz stets mit der vollen Kapazität seiner internen Stromversorgung zur Verfügung steht.

An der dem Bildschirmgerät 1 zugewandten Seite des Zusatzgerätes 2 erkennt man einen Schalter 10, der die Lampen 3 anschaltet, sobald das Bildschirmgerät 1 in das Zusatzgerät 2 eingeschoben wird.

Auf dem Bildschirmgerät 1 befindet sich unterhalb des Anzeigefeldes 6 ein Eingabefeld 11 mit Tasten 12.

Die Lampen 3 können separat ansteuerbar sein und unterschiedliche Farben besitzen. Damit kann z.B. je nach dem momentanen Betriebsmodus des Bildschirmgerätes 1 eine unterschiedliche Grundfarbe des Anzeigefeldes 6 erreicht werden.

## Patentansprüche

1. Bildschirmgerät (1) mit einem von mindestens einer Lampe (3) beleuchtbaren Anzeigefeld (6) und mit Mitteln zur Übertragung von Licht (5) auf das Anzeigefeld (6), wobei die mindestens eine Lampe (3) in einem von dem Bildschirmgerät (1) baulich getrennten Zusatzgerät (2) angeordnet ist, das Bildschirmgerät (1) weiterhin eine eigene Stromversorgung aufweist und das Bildschirmgerät (1) auch ohne das Zusatzgerät (2) einsetzbar ist, **dadurch gekennzeichnet, dass** das Bildschirmgerät (1) an seiner Rückseite und/oder seinem Seitenbereich zumindest eine Lichteinkoppelungsfläche (8) hat, hinter der die Lampe (3) des Zusatzgerätes (2) angeordnet ist,
das Anzeigefeld (6) durchleuchtbar ist und
das Mittel im Bildschirmgerät (1) zur Übertragung von Licht (5) auf das Anzeigefeld (6) ein Lichtleiter ist.

2. Bildschirmgerät nach Anspruch 1, **dadurch gekennzeichnet, dass** im Zusatzgerät (2) ein Lichtleiter (4) vorhanden ist.

3. Bildschirmgerät nach zumindest einem der vorhergehenden Ansprüche, **dadurch gekennzeichnet, dass** auf der Rückseite des Bildschirmgerätes (1) mit Lichtauskoppelungsflächen (7) des Zusatzgerätes (2) korrespondierende Lichteinkoppelungsflächen (8) angeordnet sind.

4. Bildschirmgerät nach zumindest einem der vorhergehenden Ansprüche, **dadurch gekennzeichnet, dass** die Lichtauskoppelungsflächen (7) eine konvexe bzw. konkave Form und die Lichteinkoppelungsfläche (8) eine konkave bzw. konvexe Form aufweist.

5. Bildschirmgerät nach zumindest einem der vorhergehenden Ansprüche, **dadurch gekennzeichnet, dass** das Zusatzgerät (2) eine das Bildschirmgerät (1) aufnehmende ortsfeste Halterung ist.

6. Bildschirmgerät nach zumindest einem der vorhergehenden Ansprüche, **dadurch gekennzeichnet, dass** in dem Zusatzgerät (2) ein von dem Bildschirmgerät (1) gesteuerter, die Lampe (3) aktivierender Schalter (10) vorhanden ist.

7. Bildschirmgerät nach zumindest einem der vorhergehenden Ansprüche, **dadurch gekennzeichnet, dass** das Zusatzgerät (2) eine vom Bildschirmgerät (1) unabhängige Stromversorgung hat.

8. Bildschirmgerät nach zumindest einem der vorhergehenden Ansprüche, **dadurch gekennzeichnet, dass** ein im Bildschirmgerät (1) angeordneter Akkumulator mit der externen Stromversorgung verbindbar ist.

9. Bildschirmgerät nach zumindest einem der vorhergehenden Ansprüche, **dadurch gekennzeichnet, dass** die Lampe (3) umgebungslichtabhängig dimmbar ist.

10. Bildschirmgerät nach zumindest einem der vorhergehenden Ansprüche, **dadurch gekennzeichnet, dass** das Bildschirmgerät (1) zur Anzeige von in einem KFZ benötigten Informationen ausgebildet ist.

11. Bildschirmgerät nach zumindest einem der vorhergehenden Ansprüche, **dadurch gekennzeichnet, dass** die Lampe (3) von dem Bildschirmgerät (1) beeinflussbar ist.

## Claims

1. Visual display unit (1) having a display panel (6) which can be illuminated by at least one lamp (3), and having means for transmitting light (5) onto the display panel (6), with at least one lamp (3) being arranged in an additional unit (2) structurally separate from the visual display unit (1), the visual display unit (1) further having a dedicated power supply, and it also being possible to use the visual display unit (1) without the additional unit (2), **characterized in that** the visual display unit (1) has at its rear side and/or its lateral region at least one light injection surface (8) behind which the lamp (3) of the additional unit (2) is arranged, the display panel (6) can be transilluminated, and the means in the visual display unit (1) for transmitting light (5) onto the display panel (6) is an optical conductor.

2. Visual display unit according to Claim 1, **characterized in that** an optical conductor (4) is present in the additional unit (2).

3. Visual display unit according to at least one of the preceding claims, **characterized in that** light injection surfaces (8) corresponding to light outcoupling surfaces (7) of the additional unit (2) are arranged on the rear side of the visual display unit (1).

4. Visual display unit according to at least one of the preceding claims, **characterized in that** the light outcoupling surfaces (7) have a convex or concave shape, and the light injection surface (8) has a concave or convex shape.

5. Visual display unit according to at least one of the preceding claims, **characterized in that** the additional unit (2) is a stationary holder accommodating the visual display unit (1).

6. Visual display unit according to at least one of the preceding claims, **characterized in that** a switch controlled by the visual display unit (1) and activating the lamp (3) is present in the additional unit (2).

7. Visual display unit according to at least one of the preceding claims, **characterized in that** the additional unit (2) has a power supply independent of the visual display unit (1).

8. Visual display unit according to at least one of the preceding claims, **characterized in that** a battery arranged in the visual display unit (1) can be connected to the external power supply.

9. Visual display unit according to at least one of the preceding claims, **characterized in that** the lamp (3) can be dimmed as a function of ambient light.

10. Visual display unit according to at least one of the preceding claims, **characterized in that** the visual display unit (1) is designed to display information required in a motor vehicle.

11. Visual display unit according to at least one of the preceding claims, **characterized in that** the lamp (3) can be influenced by the visual display unit (1).

## Revendications

1. Appareil à écran d'affichage (1) comportant un champ d'affichage (6) pouvant être éclairé par au moins une lampe (3) et comportant des moyens de transmission de lumière (5) sur le champ d'affichage (6), cette lampe (3), en au moins un exemplaire, étant disposée dans un appareil complémentaire (2), séparé par construction de l'appareil à écran d'affichage (1), l'appareil à écran d'affichage (1) présentant, de plus, sa propre alimentation en courant et l'appareil à écran d'affichage (1) pouvant également être mis en oeuvre sans l'appareil complémentaire (2),
**caractérisé en ce que**
l'appareil à écran d'affichage (1) possède, sur sa face arrière et/ou sur sa zone de côté, au moins une surface (8) d'entrée par couplage de la lumière, derrière laquelle est disposée la lampe (3) de l'appareil complémentaire (2),
le champ d'affichage peut être éclairé par transparence, et
le moyen dans l'appareil à écran d'affichage (1) pour la transmission de la lumière (5) au champ d'affichage (6) est un conducteur de lumière.

2. Appareil à écran d'affichage suivant la revendication 1, **caractérisé en ce que**, dans l'appareil complémentaire (2), il existe un conducteur de lumière (4).

3. Appareil à écran d'affichage suivant au moins l'une des revendications précédentes, **caractérisé en ce que**, sur la face arrière de l'appareil à écran d'affichage (1), sont disposées des surfaces (8) d'entrée par couplage de la lumière correspondant à des surfaces (7) de sortie par couplage de la lumière de l'appareil complémentaire (2).

4. Appareil à écran d'affichage suivant au moins l'une des revendications précédentes, **caractérisé en ce que** les surfaces (7) de sortie par couplage de la lumière présentent respectivement une forme convexe ou concave, et que la surface (8) d'entrée par couplage de la lumière (8) présente respectivement une forme concave ou convexe.

5. Appareil à écran d'affichage suivant au moins l'une des revendications précédentes, **caractérisé en ce que** l'appareil complémentaire (2) est un support fixe à demeure recevant l'appareil à écran d'affichage (1).

6. Appareil à écran d'affichage suivant au moins l'une des revendications précédentes, **caractérisé en ce que**, dans l'appareil complémentaire (2), il y a un commutateur (10), commandé par l'appareil à écran d'affichage (1), et activant la lampe (3).

7. Appareil à écran d'affichage suivant au moins l'une des revendications précédentes, **caractérisé en ce que** l'appareil complémentaire (2) possède une alimentation en courant indépendante de l'appareil à écran d'affichage (1).

8. Appareil à écran d'affichage suivant au moins l'une des revendications précédentes, **caractérisé en ce qu'**un accumulateur, disposé dans l'appareil à écran d'affichage (1), peut être relié à l'alimentation externe de courant.

9. Appareil à écran d'affichage suivant au moins l'une des revendications précédentes, **caractérisé en ce qu'**on peut faire varier la lumière de la lampe (3) en fonction de la lumière ambiante.

10. Appareil à écran d'affichage suivant au moins l'une des revendications précédentes, **caractérisé en ce que** l'appareil à écran d'affichage (1) est réalisé pour afficher des informations nécessaires dans un véhicule automobile.

11. Appareil à écran d'affichage suivant au moins l'une des revendications précédentes, **caractérisé en ce que** la lampe (3) peut être influencée par l'appareil à écran d'affichage (1).
